# EUROPEAN PATENT APPLICATION

(11) **EP 4 831 865 A1**
(43) Date of publication of application: **28.10.2026**
(21) Application number: 26167886.6
(22) Date of filing: 26.03.2026
(51) Int. Cl.: G06K 7/12, G06K 19/06

(54) **IMPROVEMENTS IN THREE-DIMENSIONAL MARKING READING**

(30) Priority: 23.04.2025 GB 202506014
(71) Applicant: Rolls-Royce plc, London N1 9FX (GB)
(72) Inventor: Berry, Jacob G, Derby, DE24 8BJ (GB); Huckerby, Karl S, Derby, DE24 8BJ (GB)
(74) Representative: Rolls-Royce plc

(57) **Abstract**

A system (100) for reading a three-dimensional marking (130) comprises an optical reader (100) and an illuminator (120). The optical reader comprises a sensor configured to read the three-dimensional marking, with the sensor aligned along a principal axis of the optical reader. The illuminator illuminates the three-dimensional marking (130) read by the sensor of the optical reader and has a principal axis (121) that is angularly offset from a principal axis (111) of the optical reader (110). To read a three-dimensional marking, the sensor of the optical reader (110) receives light of a first colour composition (112) from the three-dimensional marking (130) while the illuminator (120) simultaneously projects light of a second colour composition (122) onto the three-dimensional marking (130), a portion of the light of the second colour being reflected towards the sensor of the optical reader. The first colour composition (112) is different to the second colour composition (122). The system may be incorporated into a handheld device (200) or incorporated into a robot head (300) that is attachable to a robot arm (310).

## Description

### FIELD

This disclosure relates a system for reading a three-dimensional marking. In particular, it relates to a system that comprises an additional light source to augment the ability of an optical reader to read a three-dimensional marking.

### BACKGROUND

Optical readers are commonly used to read markings such as three-dimensional markings. The ability of the optical reader to read a three-dimensional marking typically reduces if the marking has degraded over time. Examples of marking degradation include the accumulation of dirt on the three-dimensional marking and /or a discoloration of the marking.

### SUMMARY

According to a first aspect, a system for reading a three-dimensional marking comprises an optical reader and an illuminator. The optical reader comprises a sensor configured to read the three dimensional marking, with the sensor configured to receive light along a principal axis of the optical reader. The illuminator illuminates the three-dimensional marking read by the sensor of the optical reader and has a principal axis that is angularly offset from a principal axis of the optical reader. The system is configured such that the sensor of the optical reader receives light of a first colour composition from the three-dimensional marking while the illuminator simultaneously projects light of a second colour composition onto the three-dimensional marking, a portion of the light of the second colour composition being reflected by the three-dimensional marking towards the sensor of the optical reader. The first colour composition is different to the second colour composition.

The light of the first colour composition may be projected by a light source of the optical reader substantially along the principal axis of the optical reader onto the three-dimensional marking where a portion of it is reflected back towards the optical reader.

The first colour composition may be blue while the second colour composition may be red.

The first colour composition may be red while the second colour composition may be blue.

The principal axis of the illuminator may be angularly offset from the principal axis of the optical reader by an angle in a range of 20 degrees to 90 degrees. More specifically, the angle may be in the range of 20 degrees to 40 degrees.

The angle may be adjustable.

The illuminator may be configured to change the second colour composition in response to an input. For example, the system may additionally include a controller that communicates with the optical reader and the illuminator. If so, if the controller determines that a three-dimensional marking has not been decoded by a first attempted reading, the controller provides the input to the illuminator to change the second colour composition and then instruct the optical reader to take a second reading of the three-dimensional marking.

The three-dimensional marking may be a linear barcode, a data matrix, a QR code. The three-dimensional marking may be formed by indenting or raising a portion of a surface of a component to be marked. The component may be a component of a gas turbine engine.

According to a second aspect, there is disclosed an apparatus comprising the system of the first aspect.

The apparatus may be a handheld device.

The apparatus may be a robot head that is attachable to a robot arm.

### BRIEF DESCRIPTION OF THE DRAWINGS

Examples will now be described by way of example only with reference to the accompanying drawings, in which:
**FIG. 1** shows an example gas turbine engine;
**FIG. 2** shows an example system for reading a three-dimensional marking;
**FIG 3** shows a schematic of another example system for reading a three-dimensional marking;
**FIG. 4** shows a flowchart describing the operation of the system of FIG. 3;
**FIG. 5** shows an example handheld device incorporating a system for reading a three-dimensional marking ; and
**FIG. 6** shows an example robot head incorporating a system for reading a three-dimensional marking.

### DETAILED DESCRIPTION

Aspects and examples of the present disclosure will now be discussed with reference to the accompanying FIGS. Further aspects and examples will be apparent to those skilled in the art.

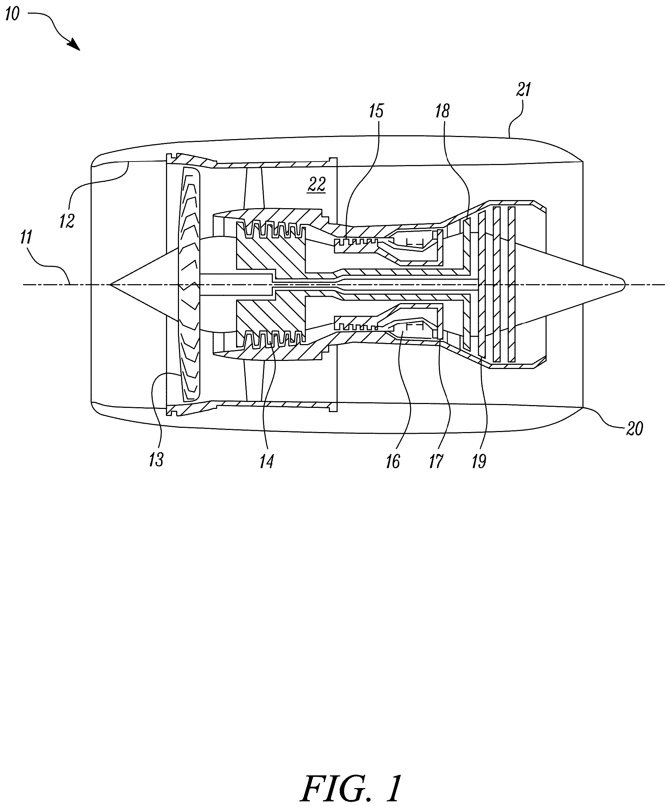

With reference to **FIG. 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow (a core air flow) into the intermediate pressure compressor 14 and a second air flow (a bypass flow) which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The gas turbine engine of FIG.1 comprises many high value components. Where possible, it is desirable to re-use these high value components once inspected as part of an engine overhaul. Examples of high value components include but are not limited to compressor blades, compressor vanes, turbine blades, turbine vanes etc.

To determine whether a specific, individual component may be re-used, it is desirable to be able to identify individual components of a component type such that the status of the individual component may be recorded electronically in, for example, an enterprise resource planning system. This enables the status of the component to be tracked and updated depending upon whether it is to be stored prior to engine refit, repaired and then stored prior to engine refit, or scrapped.

This is desirable because individual components of a common component type may degrade differently despite being operated as part of a common engine set. For example, on inspection it may be found that only a portion of removed HP turbine blades have experienced partial loss of a thermal barrier coating; on inspection it may be found that only a portion of IP compressor blades have experienced some form of foreign object impact damage etc.

To do this, each component is marked with an individual marking that is specific to it (for example, the marking relating to both a part number for the generic component type and a serial number for the specific component of that component type). The individual marking should be applied to the component during its manufacture, such that when first assembled into a gas turbine engine, the list of individual components (as determined by their serial numbers) is known.

An easy and effective means of reading a marking on the component is therefore desirable.

The marking on the component may be any suitable marking that may be read by a machine vision system. For example, the marking may comprise an alpha-numeric code, the marking may comprise a graphical symbol that can be equated to an alpha-numeric code following decoding. For example, the graphical symbol may be a linear barcode, a data matrix (dot matrix) code, a QR code etc.

Although a component may be marked by adhering a label comprising the marking to the component, it will be appreciated that this may not always be appropriate as this type of marking may not be permanent.

For example, a gas turbine engine component is typically subject to at least one of high rotational speeds and /or high temperatures during its operation within the gas turbine engine. Furthermore, following prolonged operation of the gas turbine engine, at least a portion of the component may become coated with dirt that may obscure or damage a label. Cleaning a label may not also be possible without the risk of damaging or removing the label.

It is therefore desirable that the marking applied to a component is robust and is not detachable from the component. To this end, it is desirable that that the marking is made by either indenting (lowering) a surface of the component or building up (raising) a surface of the component, such that the marking forms part of the component. As the marking comprises forming indentations or raised areas relative to the surrounding area of the component, the marking is a three-dimensional marking.

Such a three-dimensional marking (for example, a linear barcode, a data matrix, a QR code etc). may be read by an optical reader. For example, the COGNEX Dataman 8700 series handheld reader is an example of an optical reader that is suitable for reading linear barcodes, data matrix codes etc.

In use, a principal axis of the optical reader is aligned such that it is substantially directed towards the three-dimensional marking, i.e., colloquially speaking, the optical reader is pointed at the three-dimensional marking to be read.

The three-dimensional marking is not a light source (i.e., it is not a light emitter), though light incident on the marking is reflected from it. A portion of this light is reflected along the principal axis of the optical reader towards a sensor (for example, a camera sensor) within the optical reader. The sensor converts the light it receives into an electrical signal. This signal is then either decoded directly by the optical reader, or by an apparatus to which the optical reader is in communication, determining the serial number and /or part number of the component scanned.

The light incident on the three-dimensional marking may be any suitable light. For example, the light may be environmental illumination within a wider space such as a factory in which the component and optical reader reside. Examples of environmental illumination include daylight and artificial lighting (e.g., ceiling lights) provided within the wider space.

Alternatively, the light may predominantly be light that is provided by the optical reader in addition to whatever degree of environmental illumination is present within the wider space. In this case, the optical reader comprises a light source that shines light along the principal axis of the optical reader such that it hits the three-dimensional marking, where a portion of it is reflected from the three-dimensional marking back long the principal axis to the sensor of the optical reader.

In these examples, the light source may be any suitable colour or colour composition. Here, a colour composition is defined as a grouping of different colours, i.e., a colour composition comprises a range of different wavelengths of light within the visible electromagnetic spectrum. Depending upon the width of this range, the colour composition may be regarded as multichromatic (comprising multiple colours) or predominantly monochromatic (predominately comprising a single colour, such as red).

For example, daylight and artificial lighting are regarded as colour compositions, as they are both predominantly white, therefore each comprising multiple colours within the visible electromagnetic spectrum (red to violet).

For example, if the light is provided by a light source forming part of the optical reader, the light so provided also has a colour composition - e.g., it may be white, it may be a predominantly a single colour (one of red, orange, yellow, green, blue, indigo, violet).

In both examples (the optical reader does not comprise a light source; the optical reader comprises a light source), optical contrast between different areas of the three-dimensional marking is utilised by the sensor to generate an electrical signal that may be reliably decoded to determine the serial number and/or part number of the component scanned.

It may be appreciated that as a three-dimensional marking degrades, the optical contrast of the light reflected from the three-dimensional marking reduces, making it more difficult the marking to be reliably decoded.

Although optical readers are becoming increasingly sophisticated, and for example, may include features such as High Dynamic Range (HDR) imaging to improve the detail and contrast obtainable by a scan, the inventors have discovered that in some circumstances, dirt on the component and / or discoloration of the component due to operation within the gas turbine engine may still impede the ability of the optical reader to read the three-dimensional marking.

Although improvements may be made by cleaning the marking and optionally, by subsequently applying a powder such as chalk to the marking to increase optical contrast, this slows down the rate at which a manual operator can operate the optical reader and impedes the automation of the component reading process in which a manual operator with a handheld reader is replaced by an optical reader mounted as part of a head of a robotic arm.

Substances applied to the component such as powdered chalk must also be thoroughly removed before the component is refitted in a gas turbine engine.

It is therefore desirable to develop an improved way of machine reading, such that a reduced rejection rate occurs due to an inability to read a three-dimensional marking that has degraded due to either dirt of discolouration, without requiring additional cleaning or chalking of the three-dimensional marking identifying a specific component. This may also advantageously permit existing imaging equipment (i.e., an existing optical reader) to be re-used, rather than replaced by an optical reader with more advanced detection capability (for example, with a higher dynamic range).

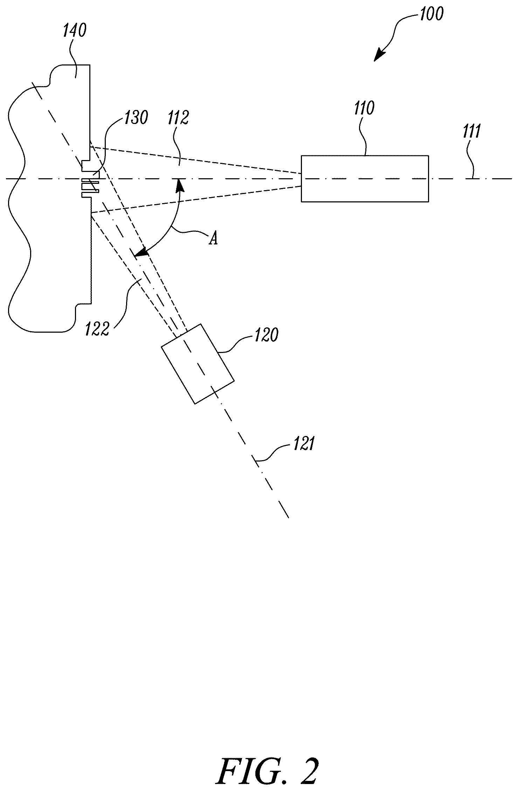

**FIG. 2** illustrates an example system according to a first aspect. The system 100 improves the ability of an optical reader 110 to read a three-dimensional marking 130 on a component 140.

In the example of FIG.2 , the optical reader 110 is a conventional optical reader, as previously disclosed. The operating principals of such an optical reader are known in the art and consequently, are not repeated in detail here.

The optical reader 110 receives light reflected from the three-dimensional marking to be read along a principal axis 111 passing through a sensor of the optical reader 110. The light received is of a first colour composition 112.

In the example of FIG. 2, the light of the first colour composition 112 is projected by a light source of the optical reader 110 onto the three-dimensional marking, where a portion of it is reflected back towards the sensor of the optical reader 110 for subsequent image reading and decoding. In some examples, the light projected by the optical reader 110 may be of one particular colour or hue in the visible electromagnetic spectrum. For example, the colour of the light may be red, orange, yellow, green, blue, indigo or violet. In particular, the light may be red, the light may be blue, the light may be green etc.

However, based on the previous disclosure, it will be understood that in other examples, the light of the first colour composition may not be provided by the system 100, but may instead be environmental illumination within the wider space. In these examples, the optical reader 110 of the system 100 may still comprise a light source, but this light source is deactivated.

FIG 2 shows that system 100 additionally comprises an additional light source 120. This additional light source 120 is also referred to as an illuminator 120. The illuminator 120 simultaneously illuminates the marking 130 read by the optical reader 110 with a second colour composition of light, different to the first colour composition.

For example, if the first colour composition 112 is red, the second colour composition 122 projected by the illuminator 120 may be one of orange, yellow, green, blue, indigo, violet etc.

For example, if the first colour composition 112 is blue, the second colour composition projected by the illuminator 120 may be one of red, orange, yellow, green, indigo, violet etc.

For example, if the first colour composition projected by the optical reader 110 is green, a second colour composition projected by the illuminator 120 may be one of red, orange, yellow, blue, indigo, violet etc.

In FIG.2 , the illuminator 120 is not aligned with the optical reader 110 but instead has a principal axis 121 about which light may be substantially symmetrically provided, the principal axis of 121 of the illuminator 120 being angularly offset from the principal axis 111 of the optical reader 110 by an angle A.

The angle A may be in a range of 20 to 90 degrees relative to the principal axis 111 of optical reader 110.

The angle A may be in a range of 20 to 65 degrees relative to the principal axis 111 of optical reader 110.

The angle A may be in a range of 20 to 40 degrees relative to the principal axis 111 of optical reader 110.

Light projected by the illuminator is reflected from a surface of component 140 comprising the three-dimensional marking 130, with a portion of this reflected light reflected substantially along principal axis 111 of optical reader 110. Thus, the sensor of optical reader 110 simultaneously receives light of both the first colour composition 112 and the second colour composition 122.

Optionally, illuminator 120 may be fitted with optics or shielding such that light of second colour composition 122 is projected by illuminator as a narrow beam or sheet of light of second colour composition 122 onto the surface of component 140.

Illuminator 120 may be any suitable light source. For example, illuminator 120 may be a laser light source; illuminator 120 may comprise a white light source and at least one colour filter; illuminator 120 may comprise at least one light emitting diode of a specified colour. Alternatively, illuminator 120 may comprise multiple coloured light emitting diodes (LEDS). An illuminator comprising multiple light emitting diodes or multiple coloured filters may be advantageous in some circumstances as the colour of the second colour combination 122 emitted (projected) by illuminator 120 may be varied.

Without wishing to be bound by any particular theory, the inventors have discovered that the improvement in the ability to read a dirty or discoloured three-dimensional marking by the system according to the first aspect may increase if the optical contrast between raised and lowered portions of the three-dimensional marking is increased. This contrast may increase if there is a difference in dominant wavelength between the first colour composition 112 and the second colour composition 122.

The wavelength of the visible electromagnetic spectrum varies between approximately 400 nanometres (nm) and 750 nanometres (nm).

Consequently, if the light source of the optical reader 110 projects red light as a first colour composition 112 (red light having a wavelength between approximately 620 nm to 750 nm), an illuminator 120 that projects blue light as a second colour composition 122 (blue light having a wavelength between approximately 450 nm to 500 nm) may increase the optical reader's ability to read the marking more that an illuminator 120 that projects green light as a second colour composition 122 (green light having a wavelength of approximately 550nm).

Without wishing to be bound by any particular theory, the inventors understand that the incorporation of illuminator 120 is beneficial in reading degraded (dirty, discoloured) three-dimensional marking 130 because projecting light of a second colour composition 122 at an angle A to principal axis 111 of the optical reader increases the optical contrast of the three-dimensional marking, as raised portions of the three-dimensional marking are illuminated by both the first colour composition 112 and the second colour composition 122, whereas recessed portions of the three-dimensional marking are illuminated primarily (in some portions of the three-dimensional marking, solely) by the first colour composition light 112. This is because as the illuminator 120 projects light at angle, A, to the principal axis of the optical reader 110, recessed portions of the three-dimensional marking are likely to be in the shadow of raised portions of the three-dimensional marking 130, with respect to illuminator 120.

Without wishing to be bound by a particular theory, illuminating the three-dimensional marking 130 by light sources from different directions, and in particular, by using light sources of different colours (for example, red and blue), increases the contrast of the image of the three-dimensional marking recorded by a light sensor of the optical reader 120. Increasing contrast aids decoding of the three-dimensional marking thereby reducing the likelihood that the optical reader 120 is unable to read the degraded three-dimensional marking.

Without wishing to be bound by a particular theory, the contrast of the illuminated three-dimensional marking may be additionally influenced by the relative sensitivity of the sensor of the optical reader to different light wavelengths. For example, if the sensor is not uniformly sensitive across the full range of visible light wavelengths, but is more sensitive at discrete, narrower wavelength ranges that are different to each other, then contrast may be increased by setting the first colour composition 112 to predominantly fall within a first narrow wavelength range, and setting the second colour composition 122 to predominantly fall within a second narrow wavelength range that is different to the first narrow wavelength range.

In a related manner, the probability of successfully reading the three-dimensional marking may be increased by illuminating the three-dimensional marking with a higher intensity of light from the illuminator and/or by providing the first light composition via a light source of the optical reader 110, as this provides a higher intensity light source than is likely to be obtained by relying solely on environmental illumination. This is because increasing the intensity of illumination increases the degree of optical contrast obtained for the same first and second colour compositions, thereby increasing the probability of successfully reading the marking.

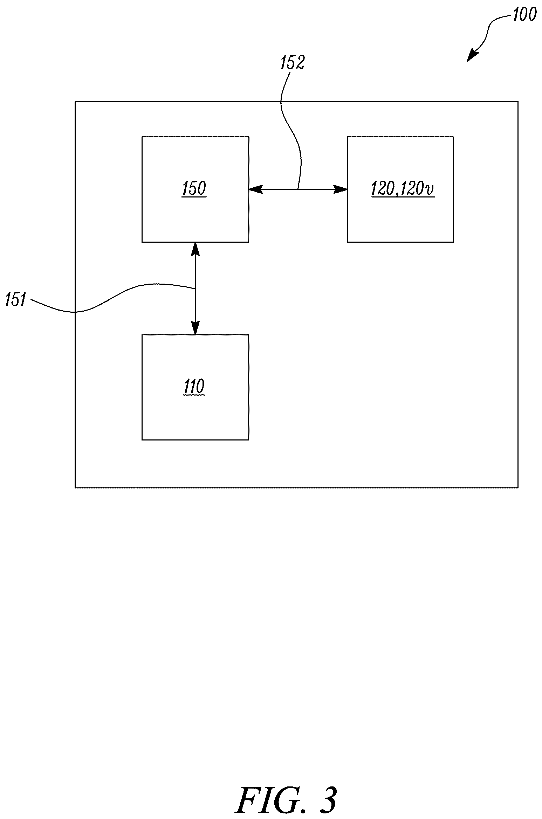

Further improvements may be made if the illuminator 120 is a variable frequency illuminator 120v, i.e., the illuminator 120 is configured to provide light of different colours in response to an input. For example, an illuminator 120 comprising multiple light emitting diodes may be capable of providing white light or any colour between red and violet in the visible electromagnetic spectrum (approximately 400 nm to approximately 750 nm). This example system is illustrated in **FIG. 3****.**

The input to the illuminator to change colour may be provided manually or automatically. For example, the illuminator may have an input that may be manually operated by a user. Alternatively, the illuminator may receive an input from an electronic controller (also referred to as a controller).

The ability to change the second colour composition 122 provided by illuminator 120 may be desirable because the degree of degradation of a three-dimensional marking (for example, discolouration of the component due to operation) may vary between components. Consequently, by varying the second colour composition 122 relative to the first colour composition 112, the contrast produced may also be varied, facilitating the ease with which the optical reader 110 reads different three-dimensional markings 130 on different components 140.

The system of FIG.3 provides an example of a system comprising a controller 150. The controller is connected by a first connection 151 to the optical reader 110 and is additionally connected by a second connection 152 to the variable frequency illuminator 120v to provide the input to it. The controller may additionally be configured to decode an electrical signal generated by the sensor of the optical reader 110 or may be in communication with an apparatus capable of doing so (not shown in FIG. 3).

When it is determined that a three-dimensional marking is to be read (for example, by the controller receiving an input to do so (not shown in FIG. 3), the controller communicates with the optical reader 110 by the first connection 151 to instruct a first colour composition 112 to be projected by the optical reader 110, and an image to be recorded on its sensor. The controller also simultaneously instructs the illuminator to provide the second colour composition 122, that is different to the first colour composition 112, whilst additionally instructing the illuminator 120v concerning what the second colour composition should be. For example, if the first colour composition 112 is red, the controller 150 may instruct the variable frequency illuminator 120v that the second colour composition 122 should be blue, etc.

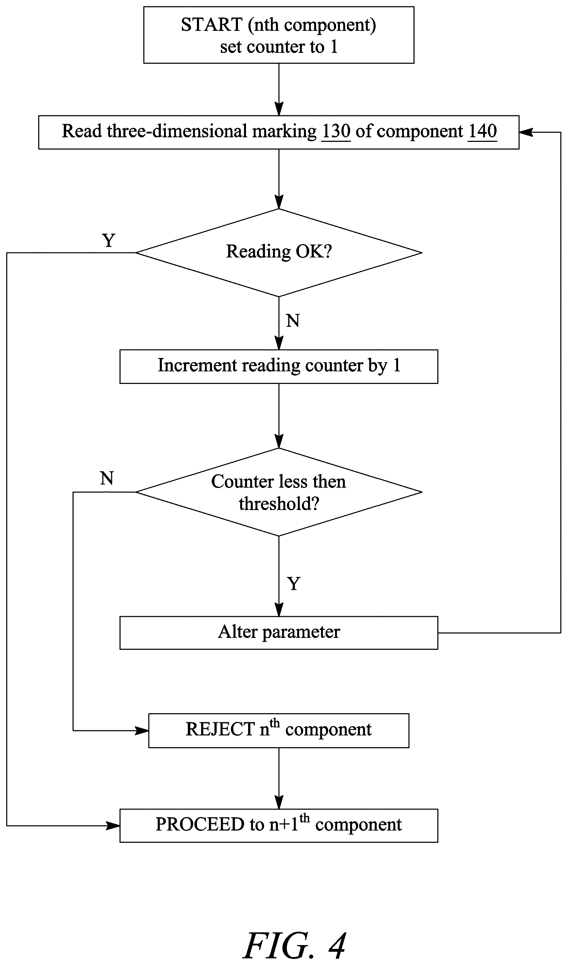

The image recorded by the sensor of the optical reader is then processed. Processing the image sets an image flag that is set to "1" if the controller determines that three-dimensional marking 130 has been read correctly and is set to "0" if the controller determines that the three-dimensional marking 130 has not been read correctly (i.e., the three-dimensional marking has not been decoded). If it is determined that the image has not been read correctly, the controller 150 then provides an input to the variable frequency illuminator 120v to change the colour of the second light 122 projected by the variable frequency illuminator 120v, whilst simultaneously instructing the optical reader 110 to project light of the first colour composition 112, to attempt another reading of the three-dimensional marking. This process is repeated until the controller 150 either determines that the three-dimensional marking 130 has been successfully read, or that manual intervention (for example, cleaning of the marking 130) is required. A flowchart for this process is illustrated in **FIG.4****.**

In more detail, FIG. 4 illustrates a process for operating system 100 to read a three-dimensional marking 130. The process of FIG. 4 may be beneficial if degradation of the marking is such that reading the three-dimensional marking may be difficult.

The process starts by setting a counter to 1 in preparation for make a reading. In the example of the FIG, the component to be read is referred to as an nth component - i.e., it is one of a series of components to be read.

The optical reader 110 then attempts to read the three-dimensional marking 130 of the component 140. As this is the first attempt at reading the marking, a default combination of first colour composition 112 and second colour composition 122 may be used. For example, the first colour composition 112 may be read, while the second colour composition 122 may be blue, or vice versa, etc.

If the reading is OK, then the process is re-initialised, in preparation to read the next component (e.g., n+1th component).

However, if the reading is not OK, then the counter is incremented by one, and a parameter of the system 100 is varied before the next reading is taken. For example, the second colour composition may be changed; angle A may be changed.

The reading is then repeated and if OK, the next component is selected for reading. If unsuccessful, the counter is incremented again, and a parameter is changed, for example, a different second colour composition 122, a different angle A.

The sequence of incrementing the counter, changing a parameter and attempting a reading, is repeated until either the component's three-dimensional marking 130 is successfully read, or the counter reaches a predetermined threshold and the component is rejected for reading.

It is envisaged that system 100 may be implemented in several different ways,

In one form, system 100 comprises a jig that is configured to hold the component 140 comprising the three-dimensional marking 130 in a specific orientation. This jig additionally comprises a first mounting feature for the optical reader 110, and a second mounting feature for the illuminator 120. The angle between the illuminator 120 and optical reader may be adjustable, such that the system may be configured for optimal reading of a three-dimensional marking on a specific component. FIG. 2 is a schematic representation of such an example system 100.

However, according to a second aspect, the system 100 may be incorporated into an apparatus.

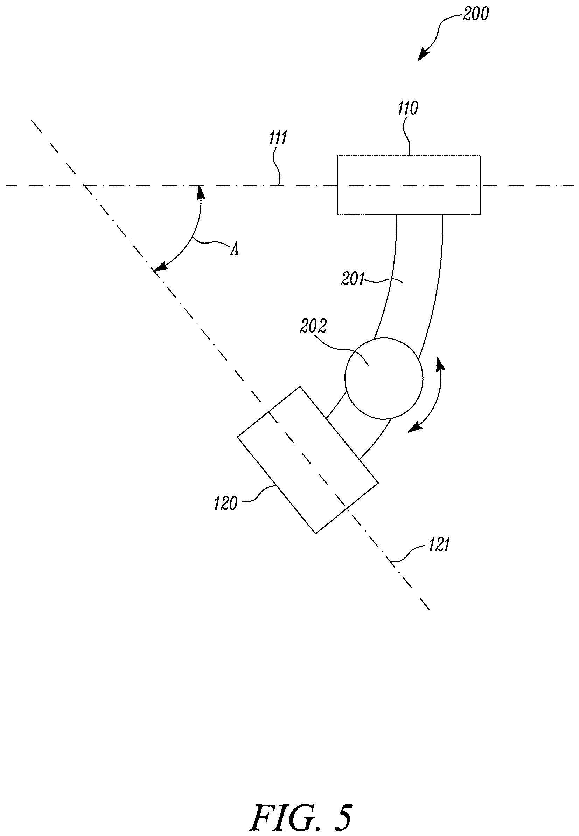

FIG. 5 shows an example apparatus in which system 100 is incorporated into a handheld device 200. In FIG. 5, the optical reader 110 is above a hand grip 201 with the illuminator 120 below the hand grip 201. The reverse arrangement of the optical read 110 below the hand grip 201 and the illuminator above the hand grip 201 is also envisaged (not shown). As in other examples, the illuminator 120 is inclined at an angle A to a principal axis of the optical reader 110. As in other examples, angle A may be in a range of 20 degrees to 90 degrees relative to the principal axis 111 of optical reader 110; angle, A, may be in a range of 20 to 65 degrees relative to the principal axis 111 of optical reader 110; angle, A, may be in a range of 20 to 40 degrees relative to the principal axis 111 of optical reader 110. The example handheld apparatus may additionally incorporate a rotational joint 202. The rotational joint is between the optical reader 110 and illuminator 120 (for example, rotational joint 201 may be part away along hand grip 201), and permits angle A to be altered.

Optionally, the system of the handheld apparatus may incorporate a controller as illustrated in FIG. 3. The controller may control a parameter of the system, such as the second colour composition 122. The controller may alternatively or additionally control angle A if the system additionally comprises a motor and rotary encoder that are in communication with controller 150 and enable closed-loop control of angle A by actuation of rotational joint 202.

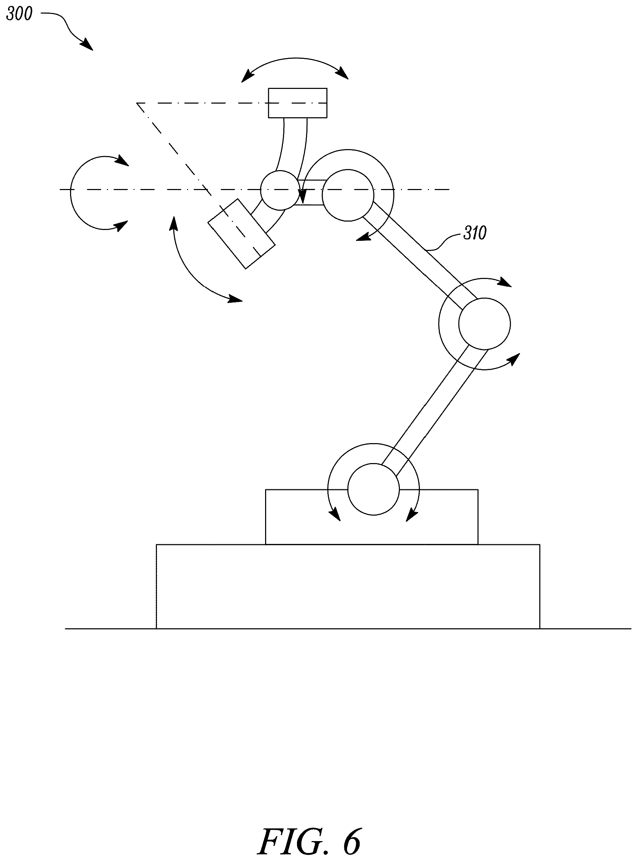

In another form, illustrated in **FIG. 6**, system 100 may be incorporated into a robot head 300 that is attachable to a robot arm 310. As in other examples, the illuminator 120 is inclined at an angle A to a principal axis of the optical reader 110. As in other examples, angle A may be in a range of 20 degrees to 90 degrees relative to the principal axis 111 of optical reader 110; angle, A, may be in a range of 45 to 70 degrees relative to the principal axis 111 of optical reader 110. As in other examples, angle A may be adjustable via a rotational joint between the optical reader 110 and illuminator 120. Optionally, the system 100 may incorporate a controller as illustrated in FIG. 3 and as disclosed above in relation to a handheld apparatus.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A system (100) for reading a three-dimensional marking (130), the system (100) comprising:
an optical reader (110), comprising a sensor, the optical reader having a principal axis (111), with the sensor of the optical reader (110) configured to receive light along the principal axis (111) of the optical reader (110); and,
an illuminator (120) that illuminates the three-dimensional marking (130) read by the optical reader (100), the illuminator having a principal axis (121); wherein,
the principal axis (121) of the illuminator (120) is angularly offset from the principal axis (111) of the optical reader (110); wherein:
the sensor of the optical reader (110) receives light of a first colour composition (112) along the principal axis (111) of the optical reader (110) from the three-dimensional marking (130), and the illuminator (120) simultaneously projects light of a second colour composition (122) onto the three-dimensional marking (130) where a portion of the light of the second colour composition is reflected towards the sensor of the optical reader, wherein the first colour composition (112) is different to the second colour composition (122).

2. The system of claim 1, wherein the light of the first colour composition (112) is projected by a light source of the optical reader (110) substantially along the principal axis (111) of the optical reader (110) onto the three-dimensional marking where a portion of it is reflected back towards the optical reader (110).

3. The system (100) of any preceding claim wherein:
the first colour composition (112) is blue and the second colour composition (122) is red; or
the first colour composition (112) is red and the second colour composition (122) is blue.

4. The system (100) of any preceding claim wherein the principal axis (121) of illuminator (120) is angularly offset from the principal axis (111) of the optical reader (120) by an angle (A) in a range of 20 degrees to 90 degrees.

5. The system (100) of claim 4, wherein the angle (A) is in the range of 20 degrees to 40 degrees.

6. The system (100) of claim 4 or 5 wherein the angle (A) is adjustable.

7. The system (100) of any preceding claim, wherein the illuminator (120) is configured to change the second colour composition (122) in response to an input.

8. The system of claim 7, wherein the system (100) additionally comprises a controller (150) that communicates with the optical reader (110) and the illuminator (120); wherein, in response to determination by the controller (150) that the three-dimensional marking (130) has not been decoded, the controller (150) provides the input to the illuminator (120) to change the second colour composition (122) and instructs the optical reader (110) to take a second reading of the three-dimensional marking (130).

9. The system (100) as claimed in claim 8, wherein in response to determination by the controller (150) that the three-dimensional marking (130) has not been decoded, the controller additionally controls a motor to change the angle (A).

10. The system (100) as claimed in any preceding claim, wherein the three-dimensional marking (130) is one of a linear barcode, a data matrix, a QR code.

11. The system (100) as claimed in any preceding claim, wherein the three-dimensional marking (130) is formed by indenting or raising a portion of a surface of a component.

12. The system as claimed in claim 11, wherein the component is a component of a gas turbine engine.

13. An apparatus comprising the system (100) as claimed in any preceding claim, wherein the apparatus is a handheld device (200) or a robot head (300) that is attachable to a robot arm (310).
